# EUROPEAN PATENT APPLICATION

(11) **EP 3 372 826 A1**
(43) Date of publication of application: **12.09.2018**
(21) Application number: 17159692.7
(22) Date of filing: 07.03.2017
(51) Int. Cl.: F03D 1/06, F03D 80/50

(54) **SPINNER INTEGRATED CONFIGURATION**

(71) Applicant: Adwen GmbH, 27572 Bremerhaven (DE)
(72) Inventor: Taubenrauch, Elmar, 27639 Wurster Nordseeküste (DE)
(74) Representative: Prinz & Partner mbB

(57) **Abstract**

The invention relates to a spinner for a rotor hub of a wind turbine, the spinner comprising a plurality of composite panels, at least one of the panels is a middle panel comprising an outer wall and a first side wall, the first side wall extending substantially perpendicularly from the outer wall towards a center of the rotor hub, and wherein the first side wall is partially configured as a first composite flange area and partially configured as an internal gangway.

## Description

### Field

The invention relates to a spinner for a rotor hub of a wind turbine.

### Background

Wind is one of the most important renewable energy technologies. Wind turbines (also referred to as a wind driven power plants, wind turbine generators, or wind energy converters) are more and more arranged in large-scale offshore wind parks. There are many technical challenges relating to these offshore wind parks, as for example the assembly of parts and the transport, the erection of the wind turbine in the sea and the maintenance of the wind turbines.

A conventional spinner of a wind driven power plant comprises steel supporting brackets which are used to mount the spinner itself to the rotor hub. The spinner is mounted to the supporting brackets by bolted connections which are positioned in the outer surface of the spinner. In this case, the supporting brackets and the bolted connections are exposed to external ambient conditions. Furthermore, the supporting brackets need to span the entire distance between the outer wall of the spinner and the rotor hub.

### Summary

It is an object of the invention to provide an improved spinner for a rotor hub of a wind turbine.

According to an aspect, an improved spinner for the rotor hub of a wind turbine is provided. The wind turbine generally comprises a tower, a nacelle, which is mounted on top of the tower, and a rotor comprising a rotor hub and a spinner. The rotor hub is mounted at the front end of the nacelle and is covered by the spinner. The spinner comprises a plurality of panels made of a composite, in particular a fiber reinforced polymer. At least one of these panels, i.e. a middle panel, comprises an outer wall and a first side wall extending substantially perpendicularly from the outer wall towards the center of the rotor hub. The first side wall can be partially configured as a first composite flange area. In other words, the first side wall may have areas which serve as composite flange areas to be coupled to other parts/flanges. The first side wall can also be partially configured as an integrated internal gangway inside the spinner. The spinner advantageously enables supporting brackets with reduced dimensions to be used compared to a conventionally configured spinner. Moreover, the spinner provides that maintenance work inside the spinner may be performed in a more convenient and efficient manner than inside a prior art spinner.

According to another aspect, the spinner can comprise a first supporting bracket (also referred to as front supporting bracket) which can be mounted to the first composite flange area of the first side wall of the middle panel and to a cast part of the rotor hub. The first supporting bracket can be configured as a metal sheet bended structure. Advantageously, the first supporting bracket can be configured to keep the middle panel in place with respect to the rotor hub. In other words, the first supporting bracket can represent a rigid connection to mount and fix the spinner, i.e. an individual panel of the spinner to the rotor hub. A line of bolted connections can be realized between the first composite flange area of the side wall and a first supporting bracket such that the loads are advantageously distributed in a shared manner along the first composite flange area of the side wall.

The first supporting bracket (front supporting bracket) can be configured as a metal bended sheet flange. The first composite flange area of the side wall of the middle panel can be configured such that the first supporting bracket only needs to span a reduced distance between the rotor hub and the first composite flange area of the middle panel of the spinner. Hence, the first supporting bracket can advantageously have reduced dimensions compared to a conventional spinner.

According to another aspect, the first supporting bracket (front supporting bracket) can comprise a bracket hatch opening which can be configured as a passage for a person. Advantageously, the bracket hatch opening of the first supporting bracket can allow a space beneath the first side wall and the first supporting bracket to be entered by a person, e.g. to do maintenance operations. The bracket hatch opening can be configured to be closable by a bracket hatch cover. Advantageously, the bracket hatch cover can be partially configured as a continuation of the integrated internal gangway of the first side wall of the middle panel.

According to another aspect, the spinner can comprise a second supporting bracket (also referred to as rear supporting bracket) and the rotor hub can comprise a rotor locking disk. The middle panel can further be partially configured as a second composite flange area and the second supporting bracket can be mounted between the second composite flange area and the rotor locking disk. Advantageously, the second supporting bracket can be configured to keep the middle panel in place with respect to the rotor locking disk, i.e. the rotor hub. In other words, the second supporting bracket can represent another rigid connection to mount and fix the spinner, i.e. an individual panel of the spinner to the rotor hub. The second supporting bracket can further stabilize the spinner with respect to the rotor hub.

According to another aspect, the middle panel can comprise an additional second side wall which can be substantially parallel to the first side wall also extending from the outer wall towards the center of the rotor hub. The second side wall can also be partially configured as composite flange areas (similar to the first side wall). The clear space or distance between the side walls can advantageously be sufficient for a person to erectly stand on the first side wall without interfering with the second side wall and to allow maintenance operations to be performed between the two side walls. The distance or space between the side walls can also allow the pitch actuators of the rotor hub to be accessed or to be extracted.

According to another aspect, one of the side walls of the middle panel can comprise a crane rail for a movable winching device. The crane rail can advantageously be integrated into the side wall. Integrating the crane rail into one of the side walls advantageously avoids occupying significant space between both side walls. The crane rail for maintenance work is substantially available without limiting the space inside the spinner.

According to another aspect, the crane rail and the movable winching device can be configured to carry a pitch actuator of a rotor blade. Furthermore, the crane rail can be arranged to move a pitch actuator inside the spinner from the front of the spinner towards the rear of the spinner. By using the crane rail the pitch actuator can be easily moved inside the spinner between different locations. The handling during maintenance operations inside the spinner can advantageously be simplified. The crane rail and the movable winching device can be configured to advantageously carry a weight load of equal to or more than 400 kg. Further advantageously, the crane rail and the movable winching device can be configured to carry a weight load of 1400 kg. The crane rail and the movable winching device can be configured to carry a pitch actuator towards the rear of the spinner in order to pass a pitch actuator across into an interior space of the nacelle. According to another aspect, the middle panel can comprise at least one removable and detachable hatch cover in the outer wall. The hatch cover of the middle panel can be configured as a sealed removable lid. For allowing entrance to the spinner, e.g. for technical staff, this hatch cover can be removed individually. The hatch cover can also be configured as hinged access hatch cover. The hinged access hatch cover can be configured to open (revolve) about 90° or more, in particular the hatch cover can revolve about a value of approximately 90° to 180°, for example approximately 120°.

The spinner can comprise a set of composite panels. The set can comprise a front panel, a left panel, a right panel and/or the middle panel. The middle panel can be arranged between the left and the right panel.

According to another aspect, the set of composite panels can advantageously cover a range of equal to or more than 60° of the surface of the spinner in a front view towards the wind driven power plant. The set of composite panels can further advantageously cover 120° of the surface of the spinner in a front view towards the wind driven power plant. Accordingly, the spinner can advantageously comprise three sets of composite panels corresponding to the number of rotor blades. This configuration can advantageously provide a three-fold symmetry of the spinner. The spinner can comprise three similar panels of each type as well as three similar first supporting brackets (front supporting brackets) and three similar second supporting brackets (rear supporting brackets). Advantageously, a single casting mold can be used for each type of panel during the manufacturing process of the panels which can significantly reduce costs and efforts. Since the front supporting brackets are similar to each other and so are the rear supporting brackets, the respective manufacturing processes can also be simplified realized with reduced costs.

According to another aspect, the left and right panels of the spinner are self-supporting. Stated differently, the spinner is supported with respect to the rotor hub only at the middle panels by means of supporting brackets. The remaining parts of the spinner are self-supporting. This aspect provides an integrated configuration or integrated design with fewer parts requiring reduced assembly efforts. The self-supporting structure of the spinner further reduces the weight and complexity of the support structure.

According to another aspect, each panel can be made of a composite, in particular a fiber reinforced polymer. The fiber reinforced polymer can be a glass fiber reinforced polymer (GFRP). A glass fiber reinforced polymer, also known as "Fiberglass" or "fiberglass" is a type of fiber-reinforced plastic where the reinforcement fiber is specifically glass fiber. The fibers may be randomly arranged and flattened into a sheet (called a chopped strand mat), or woven into a fabric. Alternatively, the fibers of a layer of the composite may be unidirectionally aligned. The polymer matrix may be a thermoset polymer matrix, most often based on thermosetting polymers such as epoxy, polyester resin, or vinylester, or a thermoplastic. Glass fibers are made of various types of glass depending upon the fiberglass use. These glasses all contain silica or silicate, with varying amounts of oxides of calcium, magnesium, and sometimes boron. Other common names for fiberglass are glass-reinforced plastic (GRP), glass-fiber reinforced plastic (GFRP) or GFK (from German: Glasfaserverstärkter Kunststoff). Because glass fiber itself is sometimes referred to as "fiberglass", the composite is also called "fiberglass reinforced plastic." The present description also uses the term "composite" for GFRP or GRP.

The panels can be connected to each other by means of overlapping flanges, which are integral to the panels. The flanges advantageously extend in the same plane as the panel to which it belongs. Flanges of curved panels may accordingly extend in a direction substantially tangential to the curve, i.e. continue in the direction of (overall) extension in the region of the panel adjacent to the flange. In other words, the respective flange extends straightly (not bent or curved) from the panel.

According to another aspect, overlapping flanges can also be used to connect the hatch to the middle panel, wherein the overlapping flanges are integral to the hatch.

According to another aspect, the drillings for the connection joints can be applied after the manufacturing process of the composite panels and after the respective panels are adjusted to each other. With this procedure fitting of the drillings in the flanges of both respective panels can advantageously be ensured.

Advantageously, the arrangement of the flanges (and the panels as well as the hatches) can be based on a high-point drainage concept. Accordingly, the flange of a higher panel overlaps the flange of a lower complementary panel of a flange connection on an outer side of the nacelle cover in a downward direction. This aspect exploits gravitational forces such that a water flow (e.g. caused by rain) is directed away from the split line (of the flange connection).

According to another aspect, a sealing can be applied between the overlapping flanges of the panels and can provide water and air tightness of the flange connection. Moreover, seal paste can be used to tighten the thread and the drill hole of the connection itself with respect to water and air. An elastomeric (rubber/silicone) washer can be applied between a steel washer and the flange. The rotor hub can advantageously be protected against outside water or other ambient influences if the hatch is closed.

Advantageously, the flange connection can comprise reinforcing angular ("L"-shaped) beams or similar profiled metal beams, which can be arranged along the flanges, thereby becoming a part of the flange connection. The reinforced flange connection allows for a simple and robust construction of the spinner.

According to another advantageous aspect, the spinner comprises at least two different flange connections, dependent on the fitting conditions and whether the flange connections are configured to be detachable flange connections or permanent flange connections. A first flange connection may comprise a rivet/clinch nut and a bolt. A second flange connection may comprise a clinch double-threaded bolt and a normal nut. A first flange connection may comprise a metal bar on one side of the flanges. A second flange connection may comprise no metal bar.

The metal bars can be arranged and conductively interconnected such that they form a faraday cage to provide a lightning protection of the rotor hub and other components.

The flange connections may be configured to constitute a substantially maintenance free connection, having an expected / calculated lifetime of approximately twenty-five years.

The configuration of the flange connections and their location and orientation around the spinner as well as the configuration of the panels provides that the spinner is more / better self-supporting, i.e. requires less connection points / smaller support structures to the rotor hub than prior art solutions.

According to another advantageous aspect, at least one panel may comprise a sandwich structure having a foam core.

Further, at least one panel of the self-supported spinner can be reinforced by at least one rib. Advantageously, the rib can be an integral part of the panel. There may be a plurality of ribs located in the panels of the spinner. The panels comprising the ribs may be formed in a sandwich construction comprising a core of foam. Advantageously, the spinner can thereby be configured to sustain snow loads (highest load on the spinner), live loads load (e.g. from maintenance work) and fall arrest loads. The present invention also provides a wind driven power plant comprising the spinner according to the aspects and embodiments of the invention.

The present invention also provides a wind park comprising a plurality of wind driven power plants comprising the spinner according to the aspects and embodiments of the invention.

Further aspects and characteristics of the invention will ensue from the following description of preferred embodiments of the invention with reference to the accompanying drawings, wherein
- FIG. 1 is a simplified perspective view of a wind turbine,
- FIG. 2 is a simplified perspective view of an exploded view of a set of panels of the spinner comprising a front panel, a left panel, a right panel and a middle panel,
- FIG. 3 is a simplified perspective view of a side wall of middle panel with an integrated crane rail,
- FIG. 4 is a simplified view of the set of supporting brackets used to mount the spinner to the rotor hub,
- FIG. 5 is a simplified perspective view of the spinner inner from the rear side of the spinner,
- FIG. 6 is a simplified perspective view towards the interior space of the spinner from the rear side of the spinner with a mounted rotor locking disk,
- FIG. 7 is a simplified cross-sectional view of a flange connection of two panels, according to the prior art,
- FIG. 8 is a simplified cross-sectional view of a flange connection of two overlapping spinner panels,
- FIG. 9 is a simplified cross-sectional view of a flange connection attaching a hatch cover to a hatch in a panel.

### Detailed description of embodiments

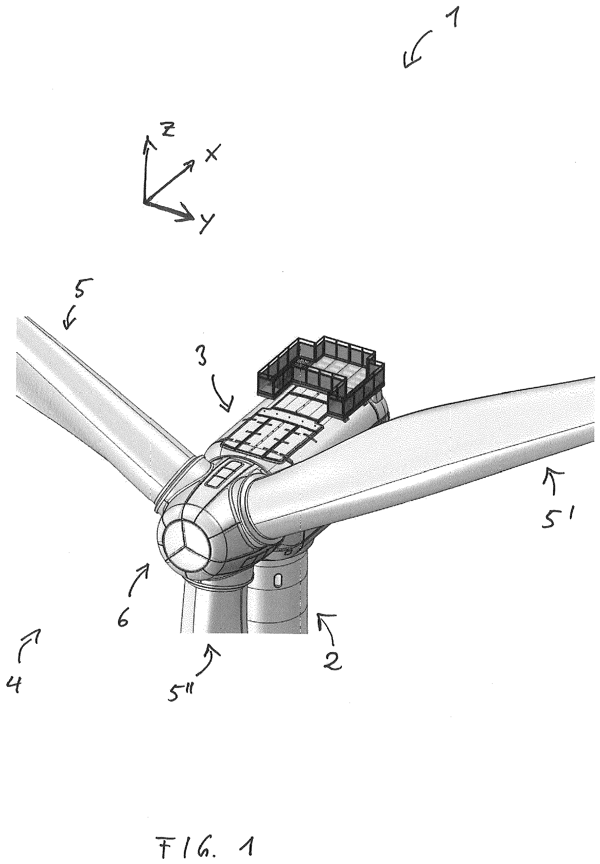

FIG. 1 is a simplified perspective view of a wind turbine or wind driven power plant 1. The wind driven power plant 1 comprises a tower 2, a nacelle 3, and a rotor 4. The nacelle 3 extends in a vertical direction Z, which is substantially parallel to the axial extension of a supporting structure, in particular a tower 2 on which the nacelle 3 can be mounted. The nacelle also extends in a horizontal plane defined by a longitudinal direction X, which is substantially parallel to a drive train to be located in the nacelle 2, and a transversal direction Y. The longitudinal direction X and the transversal direction Y are both perpendicular to the vertical direction Z and to each other. The rotor comprises three blades 5 to 5" and a spinner 6. The blades 5 to 5" are mounted inside the spinner 6 to the rotor hub (not visible). The spinner 6 is mounted at the front end of the nacelle 3.

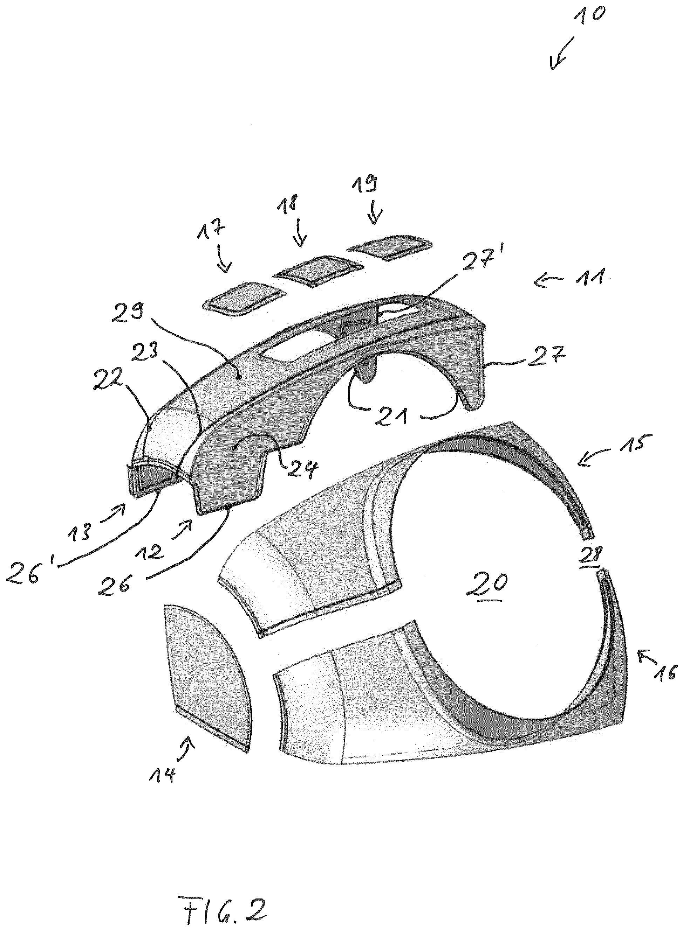

FIG. 2 is a simplified perspective view of an exploded view of a set 10 of composite panels of the spinner 6. The set 10 of composite panels according to the present embodiment advantageously covers 120° of the surface of the spinner 6 in a front view towards the wind driven power plant 1. The spinner 6 comprises three sets 10 of composite panels in total according to the three-fold symmetry of the spinner 6.

The panels of the spinner are advantageously made of a composite, in particular a fiber reinforced polymer. For the present embodiment, the fiber reinforced polymer is a glass fiber reinforced polymer (GFRP).

The set of panels comprises a middle panel 11, a front panel 14, a left panel 15, and a right panel 16. This means that the spinner 6 for the present embodiment comprises in total three similar panels of each, middle panels 11, front panels 14, left panels 15 and right panels 16 which allows costs to be reduced during the manufacturing processes. The middle panel further comprises an outer wall 29, a first side wall 12, a second side wall 13, and three removable and detachable hatch covers 17 to 19.

The outer wall 29 and the side walls 12, 13 are partially configured as composite flange areas 22, 23, 26, 26', 27, 27'. This means that the outer wall 29 is configured to provide bolted connections at specific regions 22, 23 to mount the middle panel to left and right panels 15, 16. Moreover, the side walls 12, 13 comprise additional composite flange areas 26, 26', 27, 27' for bolted connections to the supporting brackets (shown later). The side walls 12, 13 have a generally flat shape and are partially configured as internal gangway 24. Hence, the side walls 12, 13 provide the possibility to walk and operate on the gangway 24 inside the spinner 6.

The left and the right panel 15, 16 each encompass half of the rotor blade root opening in form of a recess having the shape of semicircle. If the left panel 15 and the right panel 16 are mounted to each other a substantially circular opening 20 is realized. This opening 20 serves to encompass a root of one of the blades 5 to 5" towards the rotor hub inside the spinner 6 where the root of the respective blade 5 to 5" is coupled to the hub. On the rear side of the opening 20 (towards the nacelle) the wall thickness of the connection 28 between the left 15 and the right panel 16 is rather small. This connection 28 is stabilized by a hinged connection of the rear supporting brackets as will be explained in detail later.

The side walls 12, 13 of the middle panel 11 also comprise recesses 21 substantially having a shape of a segment of an oval to match the circular opening 20 for the root of the rotor blade when the middle panel 11 and the left panel 15 and right panel 16 are mounted to each other. The recesses 21 of the side walls 12, 13 provide that side walls 12, 13 do not interfere with the roots of the mounted blades 5 to 5".

If the middle panel 11 and the left panel 15 and right panel 16 are mounted to each other a front opening remains which can be closed by the front panel 14. The front panel 14 spans 120° of the total angle and again indicates the three-fold symmetry of the surface of the spinner 6 in a front view towards the wind driven power plant 1.

The middle panel 11 of the present embodiment further comprises three hatch covers 17 to 19 within the outer wall of the middle panel 11. These hatch covers 17 to 19 are removable and detachable and provide access to the interior space of the spinner 6 if they are opened. The hatch covers 17 to 19 have a shape which substantially follows the shape of the outer wall 29 of the middle panel 11.

The term "detachable" in the present context should be understood to describe hatch covers 17 to 19 that can be fully detached from the remaining part, i.e. the middle panel 11 of the spinner 6 in an easy and convenient way. As such, removable and detachable hatch covers 17 to 19 are configured to be physically detached and moved away from the outer wall 29 of the spinner 6 to be, for example placed inside the spinner 6, e.g. on a side wall 12, 13. Sliding or revolving hatch covers which are not conceived to be easily and conveniently fully detachable from the spinner 6 are therefore not considered to be removable and detachable within the meaning of this description.

The panels 11, 14 to 16 and hatch covers 17 to 19 may at least partially be connected to each other by means of planar overlapping flange connections which are integral to the panels 11, 14 to 16 and hatch covers 17 to 19 and which are described in detail below.

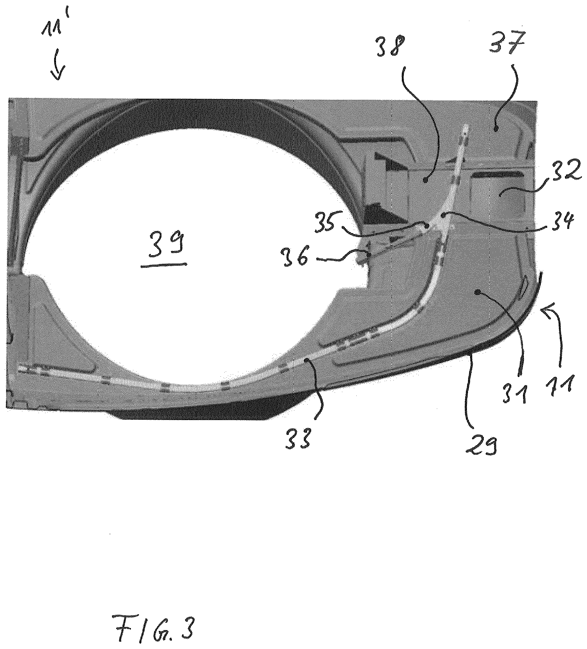

FIG. 3 is a simplified perspective view of a cross-sectional view, where a first middle panel 11 is cut in a plane perpendicular to the outer wall 29. There is a side wall 31 with an integrated crane rail 33. In the lower area only one side wall 31 of the cut first middle panel 11 is visible. There is a crane rail 33 integrated into the side wall. The side wall comprises a depression in which the crane rail 33 is mounted so that it substantially does not protrude the level of the surface of the first side wall 31. The crane rail 33 is only arranged in areas outside the recess 39 for the rotor blade root. The crane rail 33 is arranged in a curved track around the recess 39. The crane rail 33 also comprises a branch connection 34 with a short branch track 35. The track system extends along substantially the entire length of the side wall 31 (from the front face/wall of the spinner 6 to the rear side of the hub adjacent the nacelle 3).

The crane rail 33 is a track system for a movable winching device 36. With respect to FIG. 3, this movable winching device 36 is positioned at the short branch track 35 of the crane rail 33. The movable winching device 36 is movable along the track of the crane rail 33. Accordingly, the movable winching device 36 can be moved across almost the entire length of the side wall 31. The crane rail 33 and the movable winching device 36 are both configured to carry a weight load of advantageously equal to or more than 400 kg. Further advantageously, the crane rail 33 and the movable winching device 36 are both configured to carry a weight load of equal to 1400 kg.

The short branch track 35 is configured to allow a positioning of the movable winching device 36 above the pitch actuator (not shown in FIG. 3) if the pitch actuator is mounted to the rotor hub. The pitch actuator is part of a pitch drive. The pitch drive is configured to rotate a blade with respect to its longitudinal axis by means of the pitch actuator.

In the upper area of FIG. 3, there is a second side wall 37. This second side wall 37 is aligned with a tilt angle with respect to the first side wall 31. The second side wall 37 is part of a second (other) middle panel 11' of the spinner 6.

Both side walls 31 and 37 are mounted to a first supporting bracket 38 (front supporting bracket) which connects both side walls 31, 37. This supporting bracket 38 comprises a bracket hatch opening 32 which is configured as a passage for a person. The bracket hatch opening 32 allows the space beneath both side walls 31, 37 and beneath the first supporting bracket 38 to be entered by a person. If the root of the blade 5 would be mounted to the recess 39, the space beneath both side walls 31, 37 and beneath the first supporting bracket 38 would otherwise (almost) be impossible to access. The bracket hatch opening 32 can be closed by a bracket hatch cover (not shown). The bracket hatch cover is partially configured to be walkable and proceeds the internal gangways of the first and second side walls 31, 37.

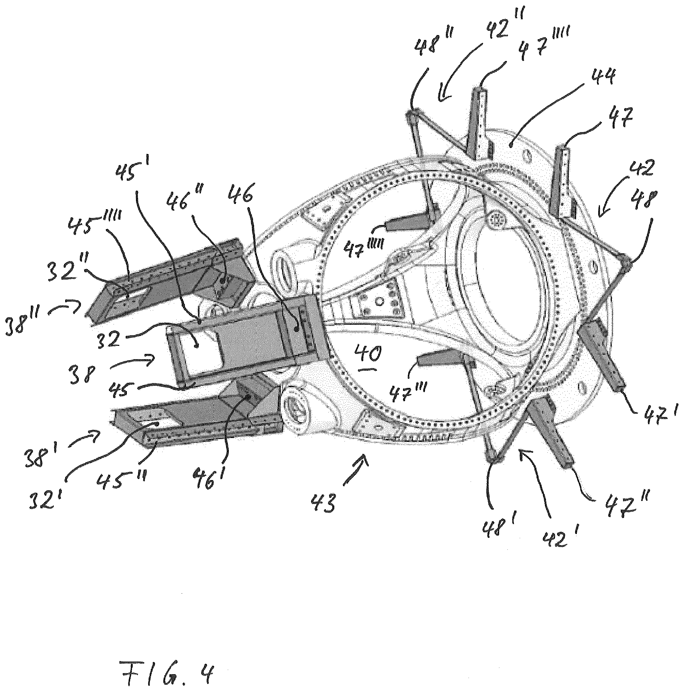

FIG. 4 is a simplified view on the supporting brackets used to mount the spinner 6 to a cast part 43 of the rotor hub. The cast part 43 is used to mount the blades 5 to 5". Supporting brackets are used to mount the spinner 6 to the rotor hub. Due to the three-fold symmetry of the spinner 6 only two different types of supporting brackets are advantageously needed for the present embodiment which reduces costs during manufacturing process.

There are a set of three front supporting brackets (first supporting brackets) 38 to 38" and a set of three rear supporting brackets (second supporting brackets) 42 to 42". The supporting brackets 38 to 38", 42 to 42" are configured to mount the spinner 6 by means of the middle panels 11 to the central cast part 43. The supporting brackets are configured as metal bended sheet structures. More specifically, the front supporting brackets (first supporting brackets) each comprise two longitudinal metal flanges 45, 45' at their lateral sides. These longitudinal metal flanges 45, 45' are mounted to composite flange areas 26, 26' of the side walls 12, 13 of two different middle panels 11. The interface between the metal flanges 45, 45' and the composite flange areas 26, 26' allows a line of bolted connections such that the loads are distributed along the flanges. The front supporting brackets (first supporting brackets) 38 to 38" also comprise flanges 46 to 46" at the end face oriented towards the rear side of the spinner 6 which are configured to mount the front supporting brackets 38 to 38" to the cast part 43 of the rotor hub.

The rear supporting brackets (second supporting brackets) 42 to 42" each comprise two rigid bar-shaped metal flanges 47, 47' and a hinged connection 48 in between. The bar-shaped metal flanges 47, 47' of the rear supporting brackets 42 to 42" are mounted to the composite flange areas 27, 27' of the side walls 12, 13 of two different middle panels 11, 11' and to the rotor locking disk 44 which is mounted to the rotor hub. Moreover, the rear supporting brackets 42 to 42" are mounted by means of the hinged connection metal flange 48 to 48" to the composite flange region 28 where adjacent left panels 15 and right panels 16 are connected to each other.

Due to the integration of the side walls 12, 13 in the middle panel 11, the supporting brackets 38 to 38", 42 to 42" have a smaller size than in a conventional configuration which comprises a middle panel which has no side walls. By their specific shape the side walls 12, 13 are advantageously configured to partially span the distance between the cast part 43 and the outer wall of the spinner 6. In other words, the side walls are configured as internal interfaces for the supporting brackets 38 to 38", 42 to 42". Consequently, the supporting brackets 38 to 38", 42 to 42" can be have reduced size.

The flange connections between the side walls 12, 13 and the front supporting brackets 38 to 38" as well as the rear supporting brackets 42 to 42" are realized in the interior space 40 of the spinner 6. Hence, the flange connections are advantageously not exposed to external environmental conditions and do not require any extra effort for sealing. Furthermore these flanges can be easily inspected or maintained.

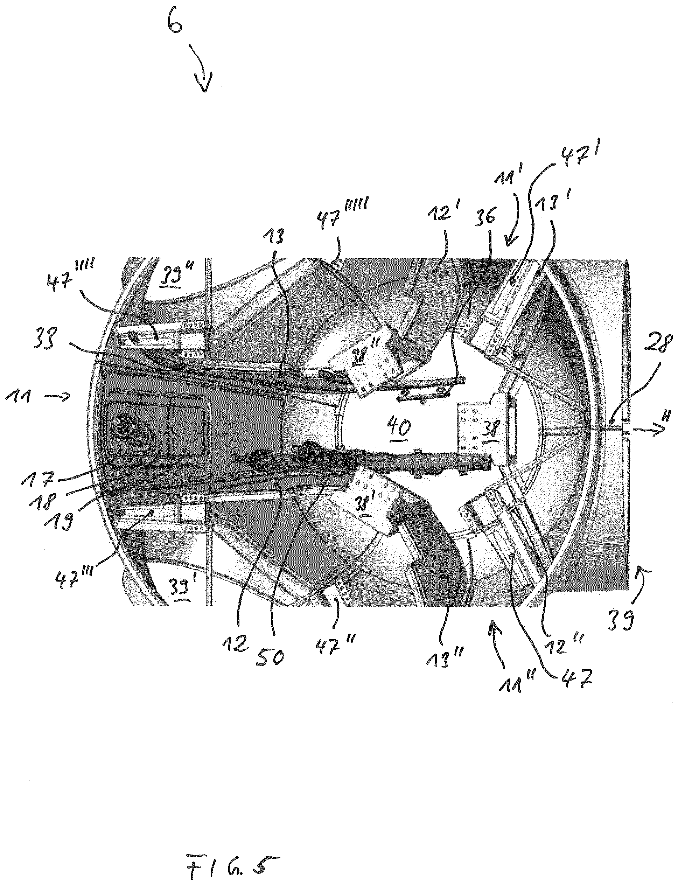

FIG. 5 is a simplified perspective view of the interior space 40 of the spinner 6 from the rear side of the spinner 6 (i.e. from the direction of the nacelle). There are three middle panels 11 to 11" and six corresponding side walls 12 to 12", 13 to 13". There are three openings 39 to 39" for passing the rotor blade roots of rotor blades 5 to 5". There are the end faces of the three front supporting brackets (first supporting brackets) 38 to 38" which are mounted to the cast part (not shown) of the rotor hub. There are also the end faces of the metal bar flanges 47 to 47""'of the rear supporting brackets 42 to 42" (second supporting brackets). These are mounted to the rotor locking disk 44 (not shown in FIG. 5) of the rotor.

Fig. 5 shows the spinner 6 in a typical alignment for maintenance work. The rotor (and hub) is blocked in a position where one blade is aligned horizontally (H) and the first and the second side wall 12, 13 of the middle panel 11 opposing the horizontally aligned blade are also in a horizontal position and the second side wall 13 is above the first side wall 12. The second side wall 13 comprises the crane rail 33. Consequently, the crane rail 33 is in an upper position. With this arrangement technical staff can walk and operate on the first side wall 12 of the middle panel 11 and e.g. perform maintenance work at a pitch actuator 50. If the pitch actuator 50 has to be removed from the pitch drive, the movable winching device 36 can be used to lift the pitch actuator 50. The pitch actuator 50 is then movable along the crane rail 33 within the spinner 6. Although it seems as if there are multiple pitch actuators 50, these pitch actuators 50 are only supposed to illustrate a movement of a single pitch actuator 50 along the crane rail 33.

There are three hatch covers 17 to 19 inside the outer wall of the middle panel 11 which are closed but could be opened, e.g. to gain access to the outer surface of the spinner 6.

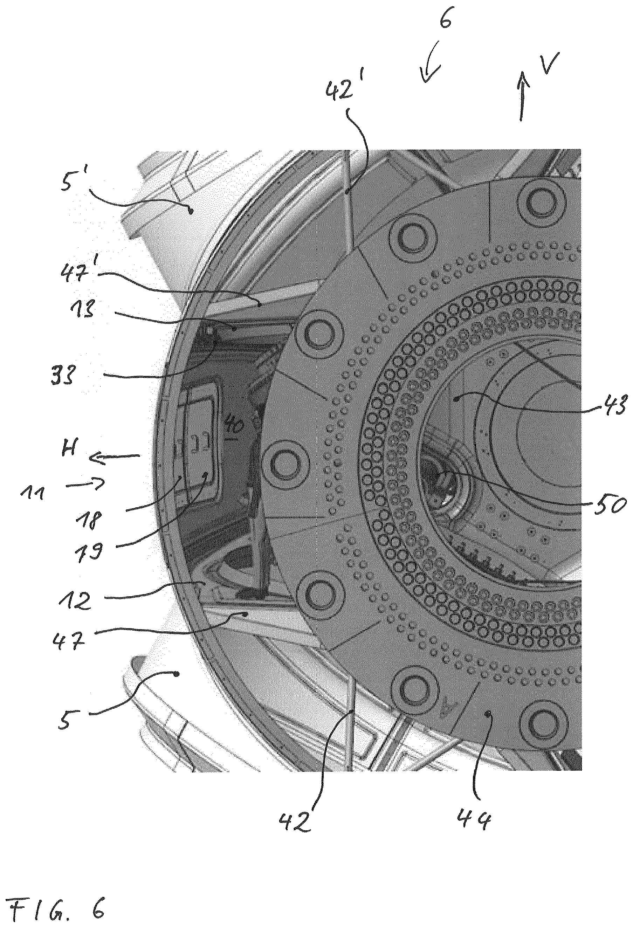

FIG. 6 is a simplified perspective view towards the interior space 40 of the spinner 6 from a rear side of the spinner 6 with a mounted rotor locking disk 44. The spinner 6 is represented in a similar configuration as in Fig. 5 with one middle panel 11 aligned horizontally but the rotor hub is now indicated by the cast part 43 and the rotor locking disk 44 of the rotor hub. The side walls 12, 13 are again aligned horizontally with the second side wall 13 at top.

The spinner 6 is mounted to the nacelle 3 (not shown in Fig. 6). The nacelle 3 comprises a circular front surface which comprises four nacelle front hatches. These nacelle front hatches are perpendicularly aligned with respect to each other along the horizontal H and the vertical direction V. The nacelle front hatches comprise removable nacelle front hatch covers. The shape of the nacelle front hatch covers substantially coincides with the shape of the section which is defined by the rotor locking disk 44, the outer wall of the middle panel 11 and two adjacent rear metal bar flanges 47, 47' of two rear supporting brackets (second supporting brackets) 42, 42'. This means that by aligning the spinner 6 such that the section coincides with one of the nacelle front hatch covers persons can access the interior space 40 of the spinner 6 from the nacelle 3 or vice versa. This also allows a pitch actuator 50 to be transferred between the interior space 40 of the spinner 6 and the interior space of the nacelle 3. The crane rail 33 is used to move the pitch actuator 50 towards the nacelle front hatch and then the pitch actuator 50 can be transferred to a service crane inside the nacelle 3.

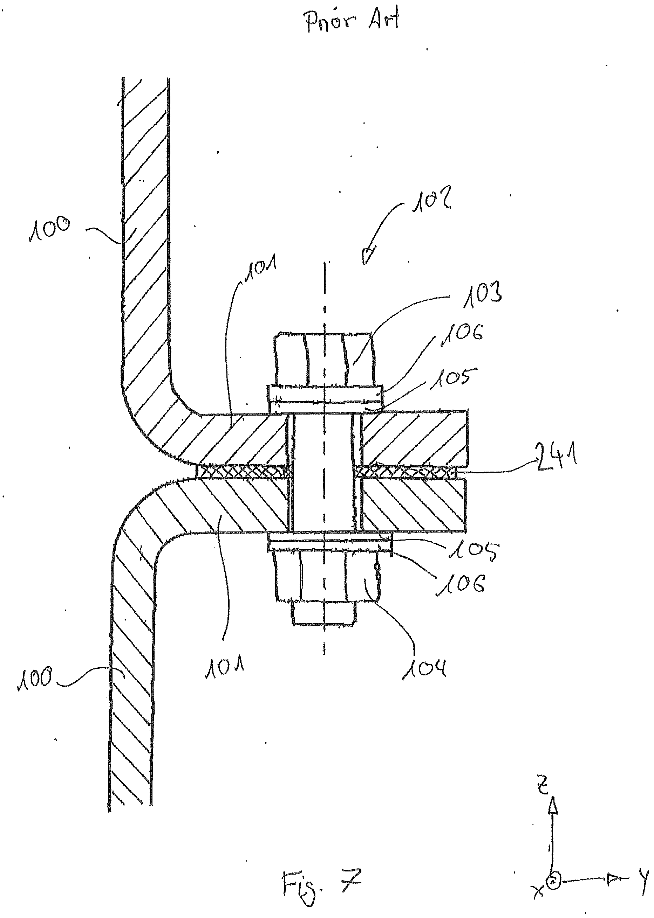

FIG. 7 shows a simplified cross-sectional view of a flange connection of two spinner panels 100, according to the prior art. Flanges 101 extend perpendicularly from the panels 100. The flanges 101 are connected by a bolted (screwed) connection 102 on the inside of the spinner. This provides that the bolt 103 and the nut 104 are both accessible from inside the spinner. The bolted connection may comprise additional washers 105 (i.e. optional elastomeric washers for sealing and/or spring washers) and metallic washers 106. Advantageously, due to the configuration of the flanges 101, the bolted assembly 102 on the inside of the spinner is well protected from environmental effects outside the spinner.

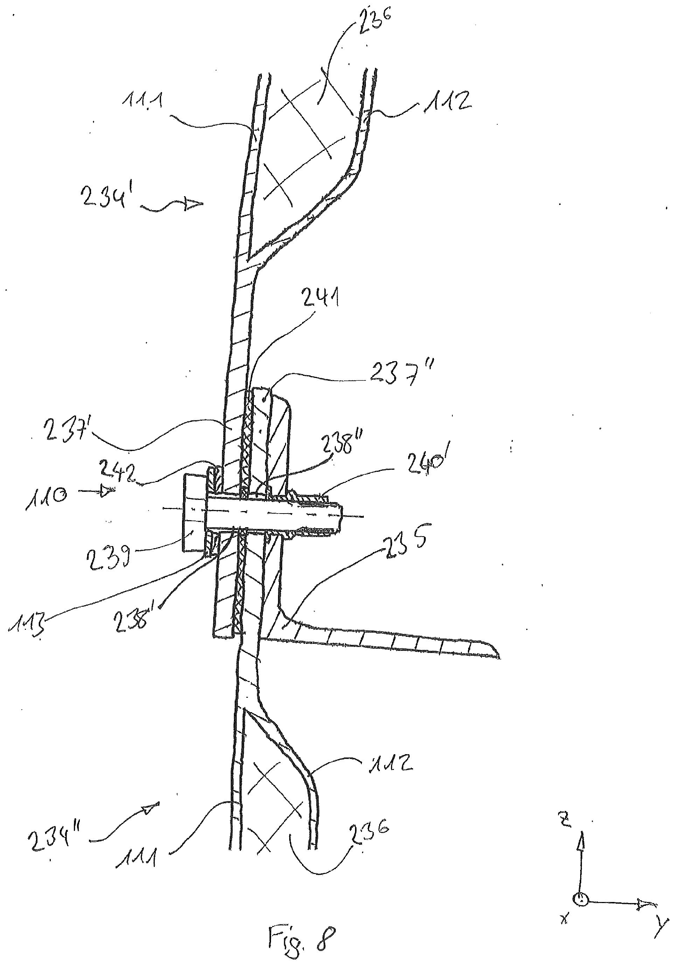

FIG. 8 shows a simplified perspective cross-sectional view of an exemplary flange connection 110 of two overlapping spinner panels 234 according to an aspect of the invention. The spinner panels 234 are made of a composite, in particular a glass fiber reinforced polymer (GFRP).

Each composite panel 234 is manufactured as a wide span self-support composite panel. The panel 234 is configured as a typical sandwich lamination. Each panel 234 comprises an outer side fiberglass layer 111 and an inner side fiberglass layer 112. The panels 234 can optionally comprise a middle foam core 236 in-between the outer side fiberglass layer 111 and the inner side fiberglass layer 112. The foam core 236 can be configured to form reinforcement ribs in the panel 234. Alternatively, the foam core 236 can be a global foam core 236, i.e. spanning a major part of the panel 234. The foam cores 236 are covered by the outer side and inner side fiberglass layers 111, 112 and enhance the stability of the panel 234.

Resin infusion is utilized during the lamination process. In a one-shot resin infusion process, the resin is distributed in a uniform manner across the layup. Subsequently, bonding / curing the complete layup can be conducted, e.g. in an autoclave. Accordingly, a majority or all the composite panels of the spinner 6 are manufactured in a one-shot lamination/manufacturing step.

The panels 234 are connected to each other by means of overlapping flanges 237. Each of the flanges 237 is integral to one of the panels 234. The flanges 237 advantageously extend in the same plane as the panel 234 to which it belongs or at least in substantially the same plane as the region of the panel 234 adjacent to the flange 237. In other words, the respective flange 237 extends essentially straightly (not bent or curved) from the adjacent region of the panel 234.

The arrangement of the panels of the spinner 6 in general, and in particular of the overlapping flanges 237, is based on a high-point drainage concept. This means that the flange 237' of the top panel 234' of a flange connection 110 having a higher level (greater altitude; greater height) spans/overlaps the flange 237" of the complementary bottom panel 234" (the bottom panel 234" having a lower level) on an outer surface of the spinner 6 in a downward direction. Hence, the arrangement of the overlapping flanges 237', 237" advantageously exploits gravitational forces which determine the water flow direction in order to keep water from flowing into the spinner 6.

The drillings 238 (drill holes) for the flange connection 110 are applied after the manufacturing process of the composite panels 234, i.e. after curing and/or autoclaving the panels 234, and after the respective panels 234', 234" are adjusted to each other. With this procedure, the accuracy of fit of corresponding drillings 238', 238" in the flanges 237 of both respective panels 234 is advantageously ensured.

According to an aspect, specialized threaded bolts 239 and nuts 240 are used. Either a (clinch) bolt 239' or a (clinch / rivet) nut 240' is pressed (clinched, riveted) into a reinforcing metal beam 235 that is part of the flange connection 110. Given this procedure, the attached threaded bolt 239' or nut 240' is fixed in position and is not rotatable. The complementary nut 240 or bolt 239 used to tighten the connection joint can accordingly be applied from the inside or outside of the spinner 6, depending on the configuration (the flange connection 110 being a permanent connection or a detachable connection). Generally, a detachable flange connection should be accessible at least from inside the spinner 6. No access to the joint is necessary from the outside which advantageously decreases the risk during assembling or maintaining the spinner 6. A permanent flange connection 110 may be operated (loosened/disengaged, tightened/engaged) from inside or the outside of the spinner 6, depending on the accessibility of the flange connection.

In this embodiment, a rivet nut 240' is riveted to the metal bar 235 on the inside. The bolt 239 is screwed into the rivet nut 240' from the outside.

The flange connection 110 is reinforced by profiled metal bars 235 (metal beams), which can be arranged adjacent to the flanges 237 (and extending along the split line), thereby becoming a part of the flange connection 110. The metal bars 235 can, for example, exhibit a flat bar shape and/or an "L"-shape (as shown). The metal bars 235 are mounted to the connection joints to stabilize the flange connection.

The metal bars 235 can be arranged and conductively interconnected such that they form a faraday cage to provide a lightning protection of the drive train and other components.

Between the panels 234 a sealing 241 is applied and provides water and air tightness of the flange connection 110. Water and air tightness generally refers to a liquid/fluid ingress protection under environmental conditions the spinner 6 is exposed to. Moreover, sealing paste can be used to tighten the drill holes 238', 238" with respect to water and air. A liquid bolt retaining compound (also: liquid screw retention or liquid screw locking) can protect the screwed connection of the bolt 239 and the nut 240 against undesired loosening. An elastomeric (rubber/silicone) washer 242 is applied between a steel washer 113 and the flange 237.

The flange connection 110 is configured to be a substantially maintenance free connection, having an expected / calculated lifetime of approximately twenty-five years.

In short, the flange connection 110 comprises (from outside to inside of the spinner 6) a bolt 239 extending through a metal washer 113, an elastomeric washer 242, a drill hole 238' in the outer / top panel 234', an elastomeric sealing 241, a drill hole 238" in the inner / bottom panel 234", and a rivet nut 240' riveted into a hole of a profiled metal bar 235. The bolt 239 is screwed into the rivet nut 240' from the outside.

The concept of planar flange connections 110 in combination with the high-point drainage concept has surprisingly proven to be more robust and easier to maintain than the prior art flange connections 100.

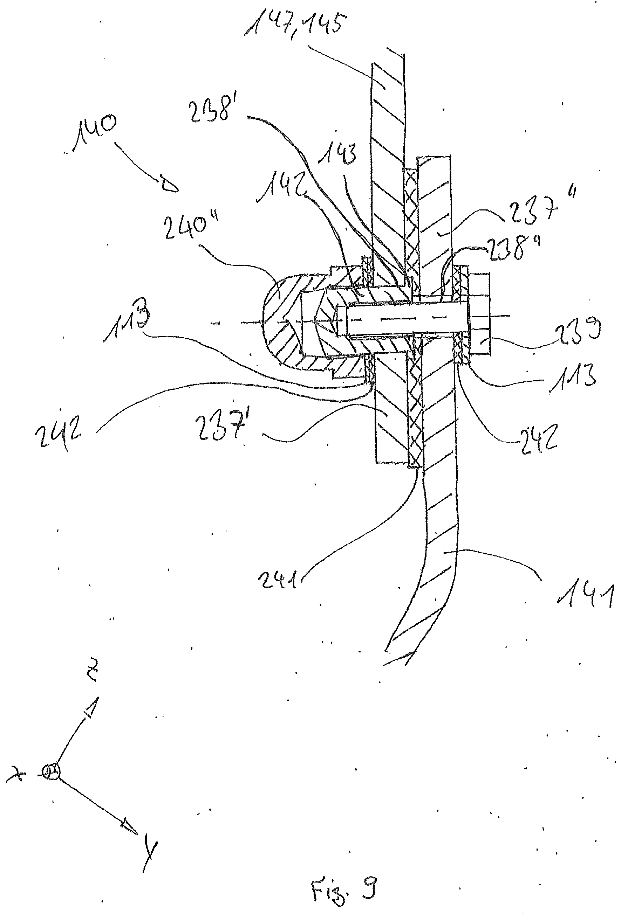

FIG. 9 is a simplified cross-sectional view of a flange connection 140 attaching a hatch cover 141 to a hatch of a panel 147, 145. The hatch cover 141 is opened and closed from inside the spinner 6.

The panel 147, 145 and the hatch cover 141 are connected to each other by means of overlapping flanges 237. Each of the flanges 237', 237" is integral to one of the panel 147, 145 and the hatch 141, respectively. The flange 237 extends in the same plane as the panel 147, 143.

The hatch cover 141 covers / spans the opening in the panel 147, 145 from the inside.

The drill holes 238 for the flange connection 130 are applied after the manufacturing process of the composite panels 147, 145, 141.

A bushing 142 having a male (outer) threading at an outer surface and a female (inner) threading at an inner surface comprises (in axial direction of the threading) a thin end and a thickened end comprising a collar 143. The bushing 142 is inserted - thin end first, thickened end last - from inside to outside the spinner 6 through a drill hole 238' in the outside flange 237'. A cap nut 240" is screwed onto the male threading of the bushing 142 from the outside. The cap nut 240" and outside flange 237' sandwich a steel washer 113 and an elastomeric washer 242 in-between. The steel washer 113 is positioned adjacent the cap nut 240", the elastomeric washer 242 between steel washer 113 and outside flange 237'. There is a sealing 241 positioned adjacent to the outside flange 237' of the outer (bottom) panel 147, 145 and sandwiched between the outside flange 237' and the inside flange 237". A bolt 239 extends (from the inside) through a steel washer 113, an elastomeric washer 242, a hole in the inside flange 237", and the sealing 241. The bolt 239 is screwed into the female threading of the bushing 141.

Moreover, sealing paste can be used to tighten the drill holes 238', 238" in the flanges 237', 237" with respect to water and air. A liquid bolt retaining compound can protect the screwed connection of the cap nut 240" and the bushing 142, and the bolt 239 and the bushing 142 against undesired loosening.

The flange connection 130 can be configured to be a substantially maintenance free connection.

In short, the flange connection 130 comprises (from inside to outside of the spinner 6) a bolt 239 extending through a metal washer 113 and an elastomeric washer 242. The bolt 239 further extends through a drill hole 238" in the inside flange 237" (of the hatch cover 141), an elastomeric sealing 241, into a bushing 142. The bushing extends through a hole 238' in the outside flange 237', an elastomeric washer 242, a steel washer 113 and into the cap nut 240". The bolt 239 is screwed into the bushing 142, and the bushing 142 is screwed into the cap nut 240".

The concept of planar flange connections 140 provides an air and watertight hatch cover that can be operated from inside the spinner 6.

Although the invention has been described hereinabove with reference to specific embodiments, it is not limited to these embodiments and no doubt further alternatives will occur to the skilled person that lie within the scope of the invention as claimed.

## Claims

1. A spinner for a rotor hub of a wind turbine, the spinner comprising a plurality of composite panels, at least one of the panels is a middle panel comprising an outer wall and a first side wall, the first side wall extending substantially perpendicularly from the outer wall towards a center of the rotor hub, and wherein the first side wall is partially configured as a first composite flange area and partially configured as an internal gangway.

2. The spinner according to claim 1, wherein the spinner further comprises a first supporting bracket and wherein the first supporting bracket is mounted to the first composite flange area and a cast part of the rotor hub.

3. The spinner according to claim 2, wherein the first supporting bracket comprises a bracket hatch opening which is configured as a passage for a person.

4. The spinner according to claim 2 or 3, wherein the spinner further comprises a second supporting bracket, wherein the rotor hub comprises a rotor locking disk, wherein the middle panel is partially configured as a second composite flange area, and wherein the second supporting bracket is mounted between the second composite flange area and the rotor locking disk.

5. The spinner according to anyone of the preceding claims, wherein the middle panel comprises an additional second side wall extending substantially perpendicularly from the outer wall towards the center of the rotor hub, and wherein the second side wall is partially configured as a composite flange area.

6. The spinner according to anyone of the preceding claims, wherein one of the side walls comprises a crane rail for a movable winching device, and wherein the crane rail is integrated into the side wall.

7. The spinner according to claim 6, wherein the crane rail is configured to carry a pitch actuator, and wherein the crane rail is arranged to move the pitch actuator inside the spinner along substantially the entire horizontal extension of the spinner.

8. The spinner according to anyone of the preceding claims, wherein the middle panel comprises a removable and/or detachable hatch cover in the outer wall.

9. The spinner according to anyone of the preceding claims, wherein the spinner further comprises a set of panels comprising a front panel, a left panel, a right panel, and the middle panel, wherein the middle panel is arranged between the left panel and the right panel.

10. The spinner according to claim 9, wherein the spinner comprises three similar sets of panels so as to provide a three-fold symmetry for the spinner.

11. The spinner according to anyone of the preceding claims, wherein at least one panel is manufactured with a one-shot lamination process.

12. The spinner according to anyone of claims 9 to 11, wherein adjacent panels are coupled to each other by means of overlapping flanges forming a planar overlapping flange connection.

13. The spinner according to claim 12, wherein an intermediate sealing element is arranged between the flanges of the panels.

14. A wind driven power plant comprising a spinner for a rotor hub according to any previous claim.

15. A wind park comprising a plurality of wind driven power plants according to claim 14.
